# EUROPÄISCHE PATENTSCHRIFT

(11) **EP 1 867 509 B1**
(45) Veröffentlichungstag und Bekanntmachung des Hinweises auf die Patenterteilung: **19.10.2011**
(21) Anmeldenummer: 07010927.7
(22) Anmeldetag: 02.06.2007
(51) Int. Cl.: B60J 7/06, B62D 33/02, B60J 5/06

(54) **Fahrzeugaufbau für insbesondere Lastkraftwagen**
Vehicle superstructure in particular for trucks
Construction automobile pour camions en particulier

(30) Priorität: 14.06.2006 DE 102006027592
(43) Veröffentlichungstag der Anmeldung: 19.12.2007
(73) Patentinhaber: Fahrzeugwerk Bernard Krone GmbH, 48480 Spelle (DE)
(72) Erfinder: Krone, Bernard Dr., 48480 Spelle (DE); Perk, Thorsten, 26901 Lorup (DE)
(74) Vertreter: Pott, Ulrich

(56) Entgegenhaltungen:
- EP-A- 0 415 715
- DE-C1- 10 124 283
- GB-A- 2 203 179

## Beschreibung

Die Erfindung bezieht sich auf einen Fahrzeugaufbau für insbesondere Lastkraftwagen in einer Ausbildung nach dem Oberbegriff des Patentanspruches 1.

Fahrzeugaufbauten von insbesondere Lastkraftwagen, Anhängern, Aufliegern sind aufgrund von Ladegutbewegungen erheblichen Belastungen ausgesetzt. So geht der Verein Deutscher Ingenieure von Belastungen der Seitenwände aus, die jeweils 0,5 G betragen. Eine Vorderwand ist beispielsweise aufgrund von Bremsvorgängen Belastungen von 0,8 G ausgesetzt und eine Rückwand sowie die Seitenwände von etwa 0,5 G. Solche Belastungen können sich bei raschen Kurvendurchfahrten, Vollbremsungen u. dgl. noch erhöhen.

Darüber hinaus sind Fahrzeugaufbauten vielfach derart gestaltet, dass diese flexiblen Seitenwände bzw. Seitenwandbereiche und aufschiebbare oder auffaltbare Dachbereiche haben. Dazu dienen insbesondere Fahrzeugplanen aus einem Kunststoff und/oder textilem Material, so dass Fahrzeugteile wie Längsträger, Querträger, Vertikalstützen und solche, einen Tragrahmen des Fahrzeugaufbaus bildende Teile, die Belastung insgesamt aufzunehmen haben. Das macht massive Bauteile notwendig und erhöht das Gesamtgewicht und darüber hinaus die Gestehungskosten.

Es ist vorgeschlagen worden (DE 101 24 283 C1), Dachplanen zu verstärken, und in diese im sich abwechselnd kreuzenden Diagonalverbund Verstärkungsglieder in eine Dachhaut einzubringen, wobei die sich kreuzenden Diagonalverstärkungsmittel von einer Seite des Fahrzeugs zu einer anderen jeweils geführt sind. Dies hat den Nachteil, dass sich insbesondere bei aufschiebbaren Dachelementen die Verstärkungsglieder beim Aufschieben in den Laderaum erstrecken und so zu Fangschlingen für eingebrachtes Ladegut werden können. Darüber hinaus sind die offen vorgesehenen Verstärkungsglieder der Witterung und auch sonstigen Verschmutzungen ausgesetzt, so dass diese insbesondere auch mit einem Kunststoffmantel versehen werden müssen. Zudem können durch diese Scheuerstellen hervorgerufen werden, z.B. auch an einer Dachhaut, was zu Verschleißerscheinungen führen kann.

Aus der EP 0 415 715 A2 ist ein Fahrzeugaufbau der eingangs genannten Art bekannt, bei der eine Dachplane von gleitverschieblich geführten Dachspriegeln gehalten ist, so dass die Plane nach Art eines Rollos über einem Aufnahmeraum eines Fahrzeugaufbaus in eine Offen- und eine Schließstellung zu überführen ist. Dazu ist ein in Fahrtrichtung letzter Spriegel mit dem Spannmittel zu verbinden, so dass über diesen letzten Spriegel die Dachplane insgesamt aufzufahren und wiederum zu schließen ist. Das Spannmittel ist über Umlenkrollen an den Seitenaußenbereichen des Fahrzeugaufbaus geführt und bereichsweise innerhalb eines Seitenlängsträgers geführt. Die Dachplane als solche lässt sich jedoch über die Spannmittel selbst nicht verstärken.

Es ist Aufgabe der vorliegenden Erfindung, einen Fahrzeugaufbau der eingangs genannten Art zu schaffen, dessen Belastbarkeit mit einfachen baulichen Mitteln zu erfüllen ist. Zur Lösung dieser Aufgabe zeichnet sich der Fahrzeugaufbau der eingangs genannten Art durch die im kennzeichnenden Teil des Anspruchs 1 angegebenen Merkmale aus.

Damit ist ein Fahrzeugaufbau zur Verfügung gestellt, bei dem über die geschützt in dem Aufnahmeraum eines jeden Seitenlängsträgers angeordneten Spannmittel sich der Fahrzeugaufbau insgesamt verspannen lässt, bei dem sich beispielsweise die Längsträger über an den Seitenwänden vorgesehenen Vertikalstützen mit der Vorder- und Rückwand aber auch mit einem Fahrzeugchassis des Fahrzeugaufbaus verspannen lassen. Die Vorderwand und die Rückwand sind über das Spannmittel miteinander zu verspannen bzw. zu verzurren, indem das Spannmittel entweder an der Vorderwand lageunveränderlich oder an der Rückwand lageunveränderlich festgelegt ist.

Bevorzugtermaßen ist dabei das Spannmittel als Spannseil ausgebildet, das in einer entsprechenden ortsfesten Befestigungsvorrichtung, z.B. an der Rückwand, festgelegt wird. Durch die Seitenlängsträger ist das Spannmittel dann zur Vorderwand geführt und kann dort über eine Spannvorrichtung, beispielsweise eine Spannrolle, gespannt werden. Dabei kann die Spannvorrichtung derart ausgebildet sein, daß eine definierte Spannkraft einstellbar ist. Es ist aber auch möglich, das Spannmittel beispielsweise bis in den Bereich des Bodens bzw. eines Fahrzeugchassis zu führen, so daß der Fahrzeugaufbau auch mit einem Fahrzeugchassis verspannt bzw. verzurrt werden kann. Eine Dachhaut bzw. eine Fahrzeugplane insgesamt braucht nicht mehr mit einer entsprechenden Verstärkung versehen werden. Das beinhaltet auch einen entscheidenden Vorteil dahingehend, daß im Falle des Vorsehens eines aufschiebbaren Daches das Dach zwischen den Längsträgern frei verschieblich ist, ohne daß auf irgendwie vorgesehene Spannmittel oder Verstärkungsglieder Rücksicht zu nehmen ist. Die Dachhaut kann aufgeschoben werden, ohne daß sich an der Verspannung etwas ändert, da das Spannmittel unverändert in dem Aufnahmeraum des Seitenlängsträgers seine Lage beibehält.

Weiterer Vorteil ist, daß aufgrund der geschützten Anordnung keine kunststoffummantelten Spannmittel vorgesehen sind. Die Spannmittel sind auf kürzestem Wege von den zu verspannenden Teilen des Fahrzeugaufbaus zu führen, so daß diese von der Spannmittellänge her optimiert sind. Eine Festigkeitserhöhung ist im gesamten Bereich des Fahrzeugsaufbaus erreicht, insbesondere auch im Bereich von allen dort vorgesehenen Vertikalstützen, wobei insgesamt auch eine flächige und nicht etwa wie beim Stand der Technik eine punktförmige Aussteifung bzw. Verstärkung des Seitenlängsträgers erreicht wird. Daraus ergibt sich eine geringere Knick-und Bruchbelastung von etwaigen vorgesehenen Mittelrungen, so daß diese Mittelrungen auch kostenoptimiert leicht ausgeführt werden können. Die Durchladehöhe des Fahrzeugsaufbaus ist ebenfalls nicht beeinträchtigt.

Bevorzugtermaßen sind in dem Aufnahmeraum noch Führungselemente in z.B. Gestalt von Führungsbuchsen vorgesehen, so daß auch bei relativ dünnen Spannmitteln, die in einem größeren Aufnahmeraum in den Längsträgern angeordnet sind, keine Fehlbewegungen anfallen.

Weitere vorteilhafte Ausgestaltungen ergeben sich aus weiteren Ansprüchen, der nachfolgenden Beschreibung und der Zeichnung. In der Zeichnung zeigen:
- Fig. 1: in einer schematischen perspektivischen Darstellung eine Ansicht eines Ausführungsbeispiels des Fahrzeugaufbaus nach der Erfindung,
- Fig. 2: den Gegenstand gemäß Fig. 1 in der Draufsicht und
- Fig. 3: einen Schnitt durch eine Verbindung eines Längsträgers mit einer Vertikalstütze entlang der Linie III-III in Fig. 1.

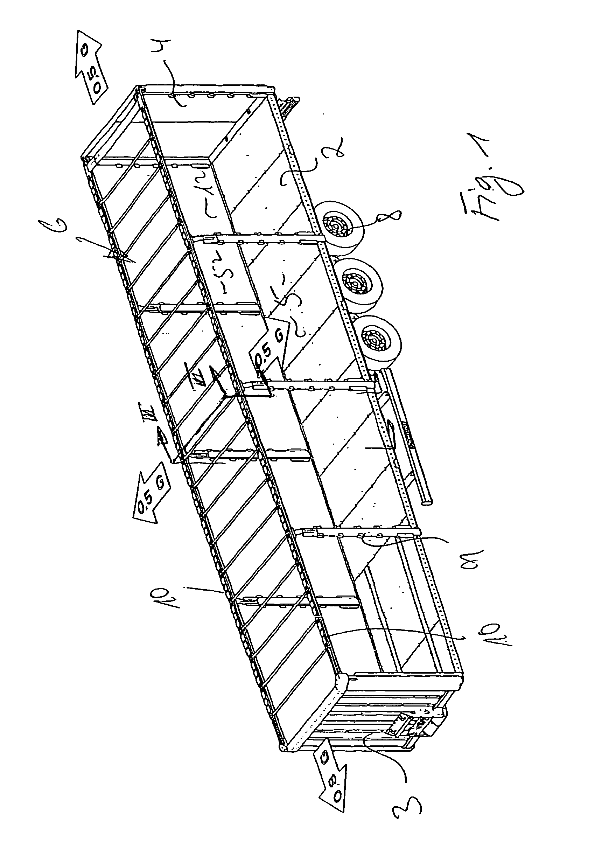

In der Zeichnung sind allgemein gleichwirkende Teile mit übereinstimmenden Bezugsziffern bezeichnet. Das in der Fig. 1 dargestellte Ausführungsbeispiel eines Fahrzeugaufbaus zum Anhängen an einen Lastkraftwagen zeigt einen allgemein mit 1 bezifferten Laderaum oberhalb eines Bodens 2, der vorderseitig durch eine Vorderwand 3, rückseitig durch eine Rückwand 4 mit zu öffnenden Laderaumtüren, Seitenwänden 5 sowie einem Dach 6 umgrenzt ist. Dieser Fahrzeugaufbau hat des weiteren noch ein Fahrzeugchassis mit Rädern 8 und eine im einzelnen nicht gezeigte Anhängevorrichtung. Wie dargestellt, können auf die Vorderwand 3 0,8 G und auf die Seitenwände 5 sowie die Rückwand 4 0,5 G Belastungen auftreten bei einer normalen Belastung im Verkehr durch das Ladegut. In den Seitenwänden sind noch Vertikalstützen 9 vorgesehen, die sich einerseits am Fahrzeugchassis bzw. dem Fahrzeugboden 2 und andererseits an Seitenlängsträgern 10 des Daches 6 abstützen.

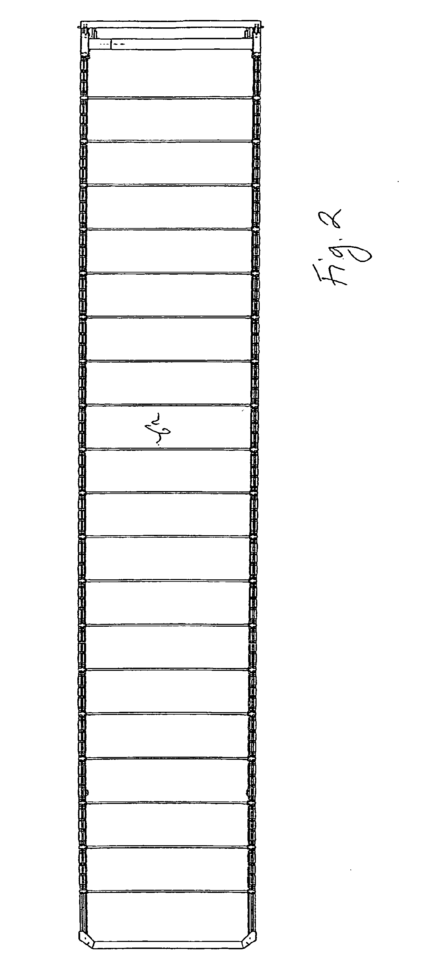

Die Draufsicht gemäß Fig. 2 zeigt, daß das Dach 6 aus einzelnen Segmenten besteht und insgesamt aufschiebbar ausgebildet ist. Dazu hat das Dach 6 seitliche Führungsansätze mit inneren Rollen 12 und 13. Ein Element 11 übergreift den jeweiligen Längsträger 10 und ist somit nach unten und jeweils zu den Seiten hin über die Rollen 12 und 13 aufschiebbar abgestützt.

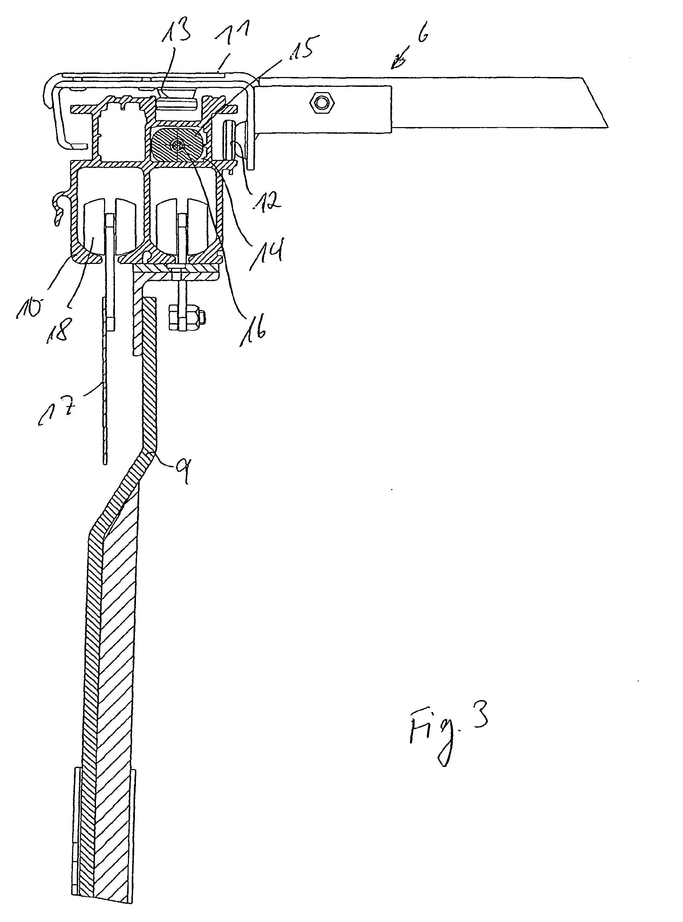

Wie im einzelnen näher aus Fig. 3 hervorgeht, ist jedes Seitenlängsprofil als Hohlprofil ausgebildet. Dieses Hohlprofil hat mehrere innere Kammern, u. a. einen inneren Aufnahmeraum 14, in dem in einer Führungsbuchse 15 zumindest stellenweise geführt ein Spannmittel in Gestalt eines Spannseiles 16 vor Witterungseinflüssen, Beschädigungen durch Gebrauch oder Ladegut und sonstigen Verschmutzungsbelastungen geschützt angeordnet ist. Dieses Spannseil 16 ist an der Rückwand 4 festgelegt und im Bereich der Vorderwand 3 über eine Spannvorrichtung zu spannen. Darüber wird auch die Vertikalstütze 9 mit einer Spannkraft belegt. In Fig. 3 bei 17 ist eine Seitenplane angedeutet, die über Rollen 18 verschoben werden kann.

## Patentansprüche

1. Fahrzeugaufbau für insbesondere Lastkraftwagen, Sattelauflieger, Anhänger, mit einem Fahrzeugboden (2) sowie einem von einer Vorderwand (3), einer Rückwand (4), Seitenwänden (5) sowie einem Dach (6) umgrenzten Laderaum (1), wobei das Dach (6) an der Vorderwand (3) und an der Rückwand (4) abgestützte Seitenlängs-träger (10) aufweist, **dadurch gekennzeichnet, dass** die Seitenlängsträger (10) als Trägerhohlprofile mit einem inneren Aufnahmeraum (14) ausgebildet sind, in dem sich entlang der Seitenlängsträgers ein Spannmittel (16) erstrecht, wobei das Spannmittel sich von der Rückwand (4) zur Vorderwand (3) erstreckt und mit zumindest einem Ende an der Vorderwand (3) oder der Rückwand (4) lageunveränderlich festgelegt ist.

2. Fahrzeugaufbau nach Anspruch 1, **dadurch gekennzeichnet, dass** das Spannmittel (16) als Spannseil ausgebildet und mit dem anderen Ende an einer Spannvorrichtung festgelegt ist.

3. Fahrzeugaufbau nach Anspruch 2, **dadurch gekennzeichnet, dass** die Spannvorrichtung eine Spannrolle aufweist.

4. Fahrzeugaufbau nach einem der Ansprüche 1 bis 3, **dadurch gekennzeichnet, dass** das Spannmittel (16) bis in den Bereich des Fahrzeugbodens geführt ist.

5. Fahrzeugaufbau nach einem der Ansprüche 1 bis 4, **dadurch gekennzeichnet, dass** die Seitenlängsträger (10) an Seitenwände (5) unterteilende Vertikalstützen (9) abstützbar sind, die von dem Spannmittel (16) über die Seitenlängsträger (10) mit einer Spannkraft beaufschlagbar sind.

6. Fahrzeugaufbau nach einem der Ansprüche 1 bis 5, **dadurch gekennzeichnet, dass** in dem Aufnahmeraum (14) des Trägerhohlprofils der Seitenlängsträger (10) Führungselemente (15) für das Spannmittel (16) angeordnet sind.

7. Fahrzeugaufbau nach Anspruch 6, **dadurch gekennzeichnet, dass** die Führungselemente (15) als Buchsen ausgebildet sind.

8. Fahrzeugaufbau nach einem der Ansprüche 1 bis 7, **dadurch gekennzeichnet, dass** ein Dachbereich zwischen den Spannmitteln (16) aufweisende Seitenlängsträger (10) verschieblich ausgebildet ist.

9. Fahrzeugaufbau nach Anspruch 8, **dadurch gekennzeichnet, dass** der verschieblich ausgebildete Dachbereich ein seitliches Laufprofil (11) hat, das das mit dem Aufnahmeraum (14) für das Spannmittel (16) versehene Hohlprofil des Seitenlängsträgers (10) übergreift und Laufrollen (12,13) hat, die in Ausnehmungen neben und oberhalb des Aufnahmeraumes (14) für das Spannmittel (16) des Trägerhohlprofils eingreifen.

## Claims

1. Vehicle body particularly for lorries, semi-trailers or trailers, having a floor (2) and a load-carrying space (1) bounded by a front wall (3), a rear wall (4), side walls (5) and a roof (6), the roof (6) having longitudinal lateral beams which are supported on the front wall (3) and on the rear wall (4), **characterised in that** the longitudinal lateral beams (10) take the form of beam-forming hollow profiles having a internal receiving space (14) in which a clamping means (16) extends along the longitudinal lateral beams, the clamping means extending from the rear wall (4) to the front wall (3) and being non-displaceably fixed in position by at least one end at the front wall (3) or the rear wall (4).

2. Vehicle body according to claim 1, **characterised in that** the clamping means (16) takes the form of a clamping cable and is fixed by the other end to a tensioning device.

3. Vehicle body according to claim 2, **characterised in that** the tensioning device has a tensioning reel.

4. Vehicle body according to one of claims 1 to 3, **characterised in that** the clamping means (16) runs as far as into the region of the floor of the vehicle.

5. Vehicle body according to one of claims 1 to 4, **characterised in that** the longitudinal lateral beams (10) can be supported on vertical columns (9) dividing the side walls (5), to which vertical columns (9) a clamping force can be applied by the clamping means (16) via the longitudinal lateral beams (10).

6. Vehicle body according to one of claims 1 to 5, **characterised in that** guiding members (15) for the clamping means (16) are arranged in the receiving space (14) of the beam-forming hollow profiles of the longitudinal lateral beams (10).

7. Vehicle body according to claim 6, **characterised in that** the guiding members (15) take the form of sleeves.

8. Vehicle body according to one of claims 1 to 7, **characterised in that** a region of the roof between the longitudinal lateral beams (10) having clamping means (16) is designed to be displaceable.

9. Vehicle body according to claim 8, **characterised in that** the region of the roof which is designed to be displaceable has a lateral profile for travel (11) which fits over the hollow profile of the longitudinal lateral beam (10) which is provided with the receiving space (14) for the clamping means (16), and the region of the roof which is designed to be displaceable has travel rollers (12, 13) which engage in recesses next to and above the receiving space (14) for the clamping means (16) of the beam-forming hollow profile.

## Revendications

1. Carrosserie automobile, en particulier pour camions, semi-remorques, remorques, comportant un plancher (2), ainsi qu'un compartiment de chargement (1), délimité par une paroi avant (3), une paroi arrière (4), des parois latérales (5) ainsi qu'un toit (6), ledit toit (6) comportant des longerons latéraux (10) mis en appui sur la paroi avant (3) et sur la paroi arrière (4), **caractérisée en ce que** les longerons latéraux (10) sont réalisés sous forme de profilés creux avec un espace de réception (14) intérieur, dans lequel un moyen de tension (16) s'étend le long des longerons latéraux (10), ledit moyen de tension s'étendant depuis la paroi arrière (4) jusqu'à la paroi avant (3) et étant fixé de manière immobile en position par au moins une extrémité contre la paroi avant (3) ou la paroi arrière (4).

2. Carrosserie automobile selon la revendication 1, **caractérisée en ce que** le moyen de tension (16) est réalisé sous la forme d'un câble tendeur et est fixé par l'autre extrémité contre un dispositif tendeur.

3. Carrosserie automobile selon la revendication 2, **caractérisée en ce que** le dispositif tendeur comporte un rouleau de tension.

4. Carrosserie automobile selon l'une quelconque des revendications 1 à 3, **caractérisée en ce que** le moyen de tension (16) est guidé jusque dans la zone du plancher du véhicule.

5. Carrosserie automobile selon l'une quelconque des revendications 1 à 4, **caractérisée en ce que** les longerons latéraux (10) peuvent être mis en appui sur des montants verticaux (9) qui divisent les parois latérales (5) et qui sont soumis à une force de serrage exercée par le moyen de tension (16) par l'intermédiaire des longerons latéraux (10).

6. Carrosserie automobile selon l'une quelconque des revendications 1 à 5, **caractérisée en ce que** des éléments de guidage (15) pour le moyen de tension (16) sont disposés dans l'espace de réception (14) du profilé creux formant les longerons latéraux (10).

7. Carrosserie automobile selon la revendication 6, **caractérisée en ce que** les éléments de guidage (15) sont réalisés sous forme de douilles.

8. Carrosserie automobile selon l'une quelconque des revendications 1 à 7, **caractérisée en ce qu'**une zone du toit est réalisée de manière à pouvoir coulisser entre les longerons latéraux (10) munis des moyens de tension (16).

9. Carrosserie automobile selon la revendication 8, **caractérisée en ce que** la zone de toit réalisée sous forme coulissante comporte un profilé de guidage (11) latéral qui s'engage au-dessus du profilé creux du longeron latéral (10), muni de l'espace de réception (14) pour le moyen de tension (16), et qui comporte des galets de roulement (12, 13) qui s'engagent dans des évidements à côté et au-dessus de l'espace de réception (14) pour le moyen de tension (16) du longeron latéral.
